# EUROPEAN PATENT APPLICATION

(11) **EP 1 524 659 A1**
(43) Date of publication of application: **20.04.2005**
(21) Application number: 03090341.3
(22) Date of filing: 13.10.2003
(51) Int. Cl.: G11B 20/00

(54) **Method and apparatus for decrypting an encrypted supplementary data set**

(71) Applicant: DEUTSCHE THOMSON-BRANDT GMBH, 78048 Villingen-Schwenningen (DE)
(72) Inventor: Adolph, Dirk, 30952 Ronnenberg (DE); Hörentrup, Jobst, 30161 Hannover (DE); Janssen, Uwe, 30926 Seelze (DE); Ostermann, Ralf, 30167 Hannover (DE); Herpel, Carsten, 30974 Wennigsen (DE)
(74) Representative: Rittner, Karsten, Dr.

(57) **Abstract**

Removable media such as optical discs (D) may carry valuable audio-visual data representing movies or the like, which are sold by content providers or studios. To prevent pirate copies, data (AV_{E}) on these media are often encrypted for copy protection. This copy protection may use a disc specific electronic decryption key (K3), which is stored on the disc itself. Supplementary data (SD) such as games, subtitle or audio streams that are regarded as being closely related to disc contents, but are not stored on the disc itself, are encrypted so that decryption is only possible with a decryption key (K3) retrieved from the disc (D), or in particular the same decryption key that is used for the disc contents (AV_{E}). The method is particularly effective for copy protection or cross usage exclusion of supplementary data (SD_{E}) when the decryption key (K3) is prevented from being accessible to the user.

## Description

### Field of the invention

This invention relates to a method and apparatus for decrypting data. In particular, the invention relates to a method and apparatus for decrypting a supplementary data set belonging to an audio-visual (AV) data set.

### Background

Ongoing progress in storage or transport media capacities influences also consumer electronic development. E.g. an optical disc complying with the Blu-ray Prerecorded (BDP) format, or Blu-ray disc (BD), may carry a full-length high definition television (HDTV) movie. Further, it is possible with BDP to download additional presentation data streams e.g. via Internet, such as subtitle-, audio- or video streams. Such data supplements are used to provide additional content or replace obsolete content. Since the AV data on the disc are multiplexed into a single data stream, such supplementary streams are "out-of-multiplex". Furthermore, future BD playback devices may include a Virtual Machine (VM), which can be operated using VM executables and used e.g. by content providers for the design and execution of freely programmable interactive applications, like video games, graphic animations or others.

The download of additional or supplemental presentation data streams, e.g. a special subtitle or new audio track, can be done by streaming techniques while running the AV data, e.g. a HDTV movie, from the BD medium, or it can be done in advance and stored on a local storage device, e.g. a hard disc drive (HDD) or flash memory. In any case the presentation shows simultaneously the AV data, e.g. a HDTV movie, coming from the BD medium and the additional stream coming from the Internet or the local storage device. VM executables coming from the BD medium or via Internet can also be stored on the local storage device.

BDP media usually carry valuable AV data representing movies or the like, which are sold by content providers, e.g. studios. To prevent pirate copies, these media are often copy protected. This copy protection may use a disc specific data sequence representing an electronic key, which is stored on the disc itself. It may e.g. be modulated as a radial offset of the nominal track position on the disc, as e.g. described in EP 0 723 216, and thus coded into the wobble signal so that it cannot be copied to another disc. The BD player can retrieve the key only while the disc is inserted, and feed it to a signal-processing unit, but the key may not be stored on another medium.

Also other possibilities for distributing decryption keys are known, e.g. smartcards or other storage devices that hold an electronic decryption key.

### Summary of the Invention

Supplementary data, however, are regarded as being closely related to BD contents, e.g. a movie, and therefore the content providers or studios would like to maintain copy protection on the complete content, i.e. the BD including all downloaded or locally stored material. This means that it should be impossible to play back or copy any of this content without authorization. The aspect of copy protection is augmented by the content providers demand that also the control of the usage of downloaded and locally stored additional streams or VM executables must be assured. That means that any content from disc or Internet should not be used for playback in combinations not intended for. In the following this will be called "cross usage exclusion". For example, if a VM executable came with a storage medium from a certain provider and was copied to the local storage of an appropriate player for controlling a game that runs together with the storage mediums content, then it should be assured that this VM executable cannot be used together with another storage medium from another provider.

In another example, if a VM executable came with a storage medium from a certain provider and was copied to the local storage of an appropriate player for controlling a game running alone, then it should be assured that this VM executable cannot be used if the carrying storage medium is not longer available to the player.

One way of providing cross usage exclusion would be to develop additional encryption methods, which detect and control the allowed and rejected cross usages of downloaded or locally stored streams or executables. Such methods, and the distribution of related decryption keys, however, would be very complex. A further difficulty is that an Internet connection may be unavailable during the access validation.

Therefore, a problem to be solved by the invention is to provide an authorization method for content that is related to a removable storage medium, and is not stored on that medium, but is received from another data source.

Further, a problem to be solved by the invention is to provide a simple way of cross usage exclusion, without the need of intricate encryption techniques.

This method is disclosed in claim 1. An apparatus that utilizes the method is disclosed in claim 6.

The present invention is based on the idea of encrypting supplementary data that relate to AV data stored on a removable storage medium so that it can be decrypted with the decryption key that is stored on the respective removable storage medium. According to the invention, encrypted supplementary data can be distributed through any channel or received from any source, e.g. via Internet, and can be locally stored, but can only be decrypted and used when the decryption key, and thus the respective removable storage medium, is available. This means e.g. for BDP that a playback device must have access to the respective BD medium before it can decrypt supplementary data related to the contents of the BD medium.

Advantageously, the proposed method may provide copy protection of both BD data and supplementary data, and may also provide control over cross usage of supplement data with BD data. Further, the proposed method is easy to implement because an existing encryption technique is used, and requires no separate distribution of a decryption key for related supplementary data.

According to the invention, the encryption key needed to decode supplementary data and BD data is located on the BD disc and is never stored on any instrument, e.g. BD player. Thus, decoding and usage of any supplementary data coming from an Internet server or the instruments local storage device is blocked unless the appropriate BD is either inserted in the BD player or is otherwise accessible.

In a sense, this uses the BD itself as a replacement for a smartcard holding a decryption key. As long as the disc is inserted in the BD player, the player can decrypt content that is encrypted with the same key that is stored on the disc. Anyhow, the advantages of the proposed system over the smartcard system are that no separate storage device is required when viewing a movie from BD, and that thus the BD player is easier and cheaper, because it needs no separate smartcard reader. Further, smartcards can easily be copied, and therefore the smartcard system is less secure.

Advantageous embodiments of the invention are disclosed in the dependent claims, the following description and the figures.

### Brief description of the drawings

Exemplary embodiments of the invention are described with reference to the accompanying drawings, which show in
Fig.1 an exemplary structure of a Blu-ray disc instrument;
Fig.2 the principle of using encryption with different, compatible keys and decryption with a common key; and
Fig.3 the structure of a storage device with limited access data blocks.

### Detailed description of the invention

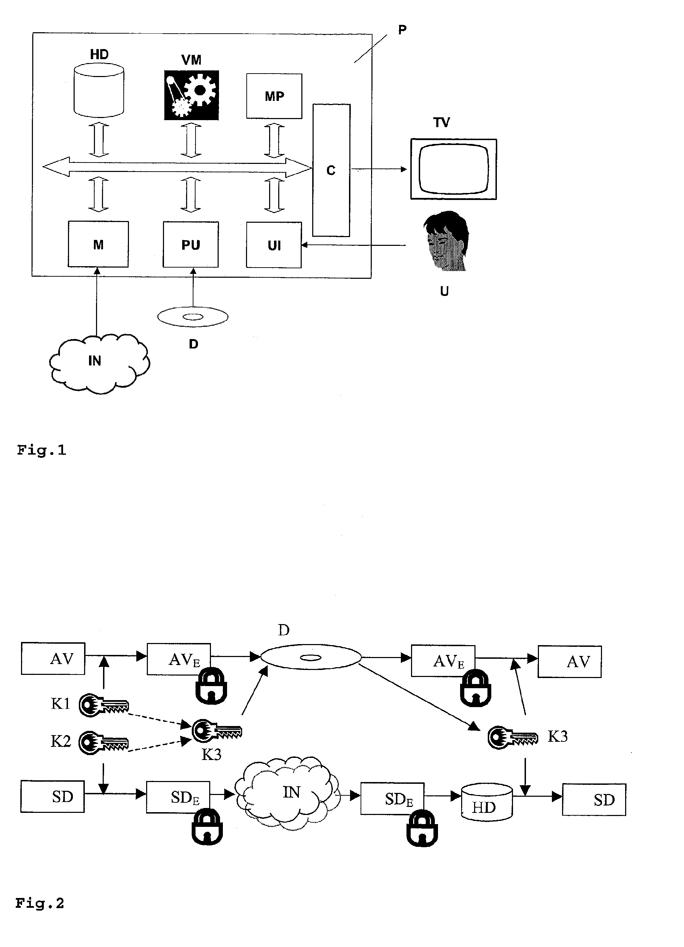

Fig.1 shows a scheme for an exemplary BD instrument system, e.g. BD player. This system is able to process different inputs for generating an interactive AV application.

The player P has access to a disc D, e.g. through an integrated disc drive comprising an optical pick-up unit PU. The pick-up unit PU reads data from the disc, and a processing unit not shown here analyses the read data and distributes them to the respective units that need the data. E.g. the disc contains AV data in a multiplex stream, which are fed to a movie player unit MP, and it may contain software for operating a virtual machine VM running on the BD player. The virtual machine VM can be used for running VM executables providing freely programmable interactive applications, and thus may combine data from the disc D and supplementary data with the BD player capabilities. These supplementary data may come from a local storage device HD, e.g. harddisk, or via modem M from the Internet IN. Also the VM executables are supplementary data, which likewise may be read from the Internet IN via modem M or from the local storage device HD, but also from the disc D.

In a preferred embodiment only encrypted data may be stored within the player, while decrypted data or the decryption key itself may only be temporarily buffered during the presentation. The decryption key is retrieved from the disc D, e.g. by the pick-up unit PU, and used by the virtual machine VM or the movie player MP to decrypt the data to be presented. When the disc D is ejected, the decryption key is not available, since the temporary buffer is deleted. If the VM executable used for decryption is encrypted itself, then e.g. an appropriate firmware within the player P may decrypt it, using the decryption key from the disc or a standard decryption key.

The movie player unit MP processes the AV data, performing e.g. demultiplexing of the streams and MPEG decoding. Its output streams, e.g. video, audio, subtitle and graphics, are fed to a composition unit C, which generates data that can be presented on an appropriate device, e.g. television set TV. The composition unit C may also receive input streams from the virtual machine VM. Further, the virtual machine VM may also control the movie player unit MP. Finally, a user U may control the whole player P via a user interface UI.

In one embodiment of the invention, being the simplest case, all data for an application come from the disc D, are processed VM,MP within the instrument P and composed C for user presentation TV. Supplement data, e.g. VM executables, and AV data streams are located on the disc D. The Internet and the local storage device HD are not involved for this case. The same decryption key located on the disc D can be used to decrypt the supplementary data and the AV data.

In a second embodiment, some data for an application are coming from the Internet and others from the disc. The disc contains standard BD data, such as AV streams, and supplementary data, e.g. VM executables, while additional supplementary data, e.g. an out-of-multiplex subtitle stream, is streamed via Internet and presented together with the BD data from disc. The decryption key located on the disc can decrypt supplementary data and BD data from the disc as well as supplementary data streamed via Internet. Thus, also decryption of Internet provided supplementary data is only possible when the appropriate disc is accessible.

In a third embodiment, the supplement data that came via Internet as described before has been stored on the local storage device HD before starting the presentation. Here, the supplement data and BD data are coming from the disc, while the additional supplement data is coming from the local storage device HD. Supplement data and BD data from the disc as well as supplement data stored on the storage device HD can be decrypted by the same decryption key located on the disc. Thus, decryption of Internet provided supplement data is only possible when the appropriate disc is accessible.

In the fourth embodiment, some data for an application are coming from the local storage device HD and others from the disc. For a faster start-up of the presentation, some supplement data, e.g. VM executables, that are stored on the disc have been copied and stored on the local storage device HD before starting the presentation. Here the BD data, e.g. AV streams, are coming from the disc and additional supplement data, e.g. VM executable is coming from the instruments local storage device HD. Supplement data and BD data from the disc as well as supplement data from the local storage device HD can be decrypted by the same decryption key located on the BD disc. Therefore, decryption of Internet provided supplement data is only possible when the appropriate BD disc is accessible.

The fifth and sixth embodiments are combinations of previously described embodiments. Here a supplementary data set has been copied and stored on the instruments local storage device HD before starting the BD presentation, and further supplement data, e.g. an out-of-multiplex subtitle stream, is in a fifth embodiment coming via streaming from the Internet, or has in a sixth embodiment previously been downloaded and stored on HD. All supplementary and BD data can be decrypted by the same decryption key, and thus decryption of any related supplement data is only possible when the appropriate BD disc is accessible.

In a seventh embodiment, some data for an application are stored on the instruments local storage device HD and others on the BD disc. For general use together with discs from a first studio some supplementary data, e.g. a VM executable, has been copied and stored locally in the instrument before starting the BD presentation. Here the BD data being AV streams are coming from the disc, and supplementary data is coming from the instruments local storage device HD. The BD data from the disc D as well as supplementary data stored on the instruments storage device HD are not encrypted by the same but by a compatible encryption key, as known e.g. from public-key systems. The decryption key located on the BD disc is able to decrypt also the supplementary data coming from the instruments local storage device HD. Thus, decryption of locally stored supplement data is only possible when the related disc or another disc of the same studio is accessible, providing the compatible decryption key.

This is shown in Fig.2. Presentation data AV, which may also include supplementary data sets, and another related supplementary data set SD are encrypted on the studio side with different keys K1,K2, and the encrypted AV data AV_{E} are distributed on a disc D, which also contains the decryption key K3, while the encrypted supplementary data set SD_{E} is distributed via Internet IN. When the encrypted supplementary data set SD_{E} is retrieved from the Internet IN, it may be stored e.g. on a harddisk HD as long as it is not decrypted. The decryption key K3 that can decrypt both, the AV data AV_{E} and the stored supplementary data SD_{E}, is only available when the corresponding disc D is readable.

The eighth and ninth embodiment are combinations of previously described embodiments. Here a supplementary data set has been copied and stored on the instruments local storage device HD before starting the BD presentation, and further supplement data, e.g. an out-of-multiplex subtitle stream, is in an eighth embodiment coming via streaming from the Internet, or has in a ninth embodiment previously been downloaded and stored on HD. All supplement and BD data, except the supplement data for general use, is encrypted with a first encryption key. The supplement data for general use, as described in the seventh embodiment, is encrypted by a second encryption key that is compatible, but not identical, to the first encryption key. Thus, decryption of Internet or locally stored supplement data is only possible while the appropriate disc is accessible. But advantageously a decryption of the supplement data for general use is possible while any disc from a specified group of discs is available, e.g. a disc coming from the same studio as the supplement data.

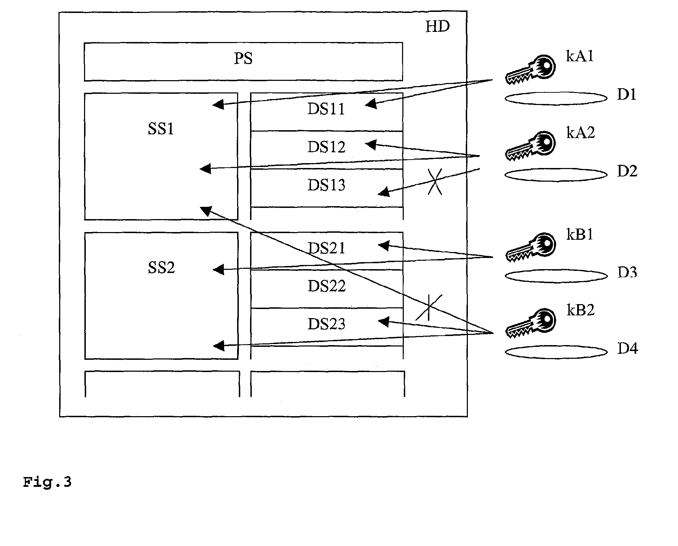

The principle of supplementary data for a more general use is described in more detail in the following. Fig.3 shows various storage blocks within the local storage device HD. In particular these are a public storage block PS, provider or studio specific general storage blocks SS1, SS2 and disc specific storage blocks DS11,...,DS23. The public storage block PS holds any data that is not encrypted, e.g. a list of all disc titles ever inserted into the player, or other unprotected data. When a disc D1 provided by a first studio is inserted in the player, and the disc contains a decryption key kA1, the key kA1 can be used to decrypt disc specific data DS11 or studio specific general data SS1, e.g. VM executables, games or screen savers. When another disc D2 provided by the same studio is inserted, its decryption key kA2 may also be used to decrypt disc specific data DS12 or the same studio specific general data SS1 as before. When another disc D3 provided by a second studio is inserted, its decryption key kB1 may be used to decrypt disc specific data DS21 or data SS2 specific to the second studio. Generally, only keys on several or all discs from a certain studio can decrypt the data that are specific to the studio, and only a key on a certain disc can decrypt data that are specific to the disc, such as a subtitle track, an audio track or any intermediate processing results. This implements an effective cross usage exclusion.

The data blocks mentioned above may be predefined areas of the storage device HD, but may also be an amount of stored data, independent of specific storage area. In the latter case, e.g. the data block DS11 belonging to a certain disc D1 is the entirety of all files that can be decrypted only with the respective disc specific key kA1.

In a further embodiment, certain other discs may access disc specific data, e.g. multi-volume discs may access each other's data blocks. Also other combinations are possible, e.g. a provider specializes on distribution of supplement data that refers to contents on removable storage devices of other providers. Then the specialized provider may encrypt the supplementary data so that these data can be decrypted with a key from the other provider's storage device.

Examples for supplementary data are subtitle-, audio-, video-, or graphics streams, playlists, VM executables or movie objects such as additional scenes. Supplementary data may be data that are directly used for the presentation of contents, but e.g. were not ready at production time of the disc, like audio or subtitle streams in rarely used languages. Supplementary data may also be data that have any relation to the disc contents or the content provider, like bonus tracks, games, additional scenes or special screen savers. It is even possible that the amount of supplementary data is higher than the amount of data on the removable storage device, so that the main purpose of the removable storage device is to hold one or more copy protected decryption keys and some basic presentation data.

In one embodiment of the invention, the removable storage device may hold more than one decryption key, wherein at least one key may be used for decryption of supplementary data. As described above, it is most advantageous if also the separate decryption key cannot be copied to another storage medium.

The described scenario is not just applicable to BDP, but can also be used for other applications. In principle, the proposed method can be used for secure distribution or storage of all kinds of supplementary data relating to removable storage devices that hold their own decryption key, particularly if it is a non-retrievable key.

The invention is independent from any specific encryption algorithm. State of the art cipher algorithms can be used, e.g. AES (Advanced Encryption Standard) with 128, 192 and 256-bit keys as an example for a symmetric cryptographic algorithm, or RSA (Rivest - Shamir - Adelman coding) as an example for an asymmetric cryptographic algorithm using a public and a private key for encryption and decryption. Further, the described method can also be used to detect whether the data on a removable storage medium and related supplementary data from another medium are both authorized by the same authority. If a supplementary data stream is not decryptable by the decryption key of its related removable storage medium, either of the storage medium or the supplementary data stream may be a pirate copy.

The invention may particularly be used to provide a copy protection method for supplementary data relating to prerecorded optical discs that contain a copy protected decryption key, as e.g. according to the BDP standard.

Further, with the proposed method it is possible to manufacture and sell a basic version of copy-protected removable storage media, e.g. optical discs, so that the same version can be sold in several countries, and country specific supplement data can be individually downloaded later. Therefore such storage medium may already be sold while not all aspects of the contents are ready, e.g. with certain subtitle tracks or translated audio tracks missing.

## Claims

1. Method for decrypting data, the data comprising a first and a second data set, the first and second data set being encrypted, wherein said first data set (AV_{E}) and a respective electronic decryption key (K3) are stored on a removable storage medium (D), and the second data set (SD_{E}) is not stored on said removable storage medium (D) but is related to the first data set (AV_{E}),
**characterized in**
- retrieving the first data set (AV_{E}) from the removable storage medium (D);
- retrieving the decryption key (K3) from the removable storage medium;
- retrieving the second data set (SD_{E}) from a second data source (IN);
- decrypting said first data set (AV_{E}) using said decryption key (K3); and
- decrypting said second data set (SD_{E}) using said decryption key (K3).

2. Method according to claim 1, wherein the first data set (AV) comprises at least audio-visual data, and the second data set (SD) is a supplementary data set.

3. Method according to claim 1 or 2, wherein the second data set (SD) comprises one or more of subtitle-, audio-, video- or graphics data, playlists, movie objects, executables, bonus tracks, games or screen savers.

4. Method according to any of the previous claims, wherein the electronic decryption key (K3) is only accessible while a removable storage medium (D) that contains said electronic decryption key (K3) is readable.

5. Method according to any of the previous claims, wherein two or more electronic decryption keys (K1,K2) are stored on the removable storage medium, wherein at least one of said keys can be used for decryption of the first data set (AV_{E}) and another of said keys can be used for decryption of the second data set (SD_{E}).

6. Apparatus for decrypting a data set, the data set comprising a first and a second data set, the first and second data set being encrypted, wherein said first data set (AV_{E}) and a respective electronic decryption key (K3) are stored on a removable storage medium (D), and the second data set (SD_{E}) is not stored on said removable storage medium (D) but is related to the first data set (AV_{E}), **characterized in that** the apparatus comprises
- means for retrieving the first data set (AV_{E}) from the removable storage medium (D);
- means for retrieving the decryption key (K3) from the removable storage medium (D);
- means for retrieving the second data set (SD_{E}) from a second data source (IN);
- means for decrypting said first data set (AV_{E}) using said decryption key (K3); and
- means for decrypting said second data set (SD_{E}) using said decryption key (K3).

7. Apparatus according to claim 6, further comprising local storage means (HD) for storing said first or second data set, or parts of said first or second data set, before decryption.

8. Method or apparatus according to any of the previous claims, wherein the electronic decryption key (K3) is the only suitable key for decrypting the first data set (AV_{E}), but is one of several suitable keys for decrypting the second data set (SD_{E}) .

9. Method or apparatus according to any of the previous claims, wherein the removable storage medium (D) is an optical disc.

10. Method or apparatus according to any of the previous claims, wherein the first and second data sets are encrypted using RSA (Rivest-Shamir-Adelman) coding.
